Europäisches Patentamt

(19) European Patent Office

Office européen des brevets

(11) Publication number: **0 181 190**
A2

# (12) EUROPEAN PATENT APPLICATION

(21) Application number: 85308008.3

(22) Date of filing: 04.11.85

(51) Int. Cl.⁴: **C 12 G 3/04**
**C 12 G 3/06**

(30) Priority: 06.11.84 GB 8427997
16.07.85 GB 8517916

(43) Date of publication of application:
14.05.86 Bulletin 86/20

(84) Designated Contracting States:
AT BE CH DE FR IT LI LU NL SE

(71) Applicant: WILLIAM GRANT & SONS LIMITED
Glenfiddich Distillery
Dufftown Banffshire Scotland(GB)

(72) Inventor: Wilkin, George Desmond
William Grant & Sons Ltd. The Girvan Distillery
Girvan Ayrshire(GB)

(74) Representative: March, Gary C.
Herbert J. W. Wildbore Wardrobe Court 146a Queen
Victoria Street
London EC4V 5AT(GB)

(54) Beverage process and compositions.

(57) Process for making a beverage or ingredient therefor comprises forming an alcoholic solution of at least one flavoured component comprising alcohol-soluble oil, e.g. citrus fruit oil, diluting the alcoholic solution with water or water/alcohol mixture to form an emulsion which is then filtered through a filter system to separate the emulsion and the filtrate collected.

The process is especially applicable to naturally occurring flavoured substances, preferably in the form of an alcohol-extracted oil and flavour transfer to an aqueous alcoholic medium can be more efficient than counter-current extraction or tincture techniques.

EP 0 181 190 A2

-1-

## Beverage Process and Compositions

This invention is concerned with processes for making a beverage or an ingredient for use in a beverage and with beverage compositions. More specifically, the invention is directed to flavoured beverages which have been obtained by a novel process or which comprise at least one ingredient that has undergone the said process.

The principal field of application of the invention is the manufacture of aqueous-alcoholic flavoured drinks which may or may not be subsequently diluted with water or other diluents such as soda, tonic and the like prior to consumption. The final alcohol concentration of the beverage may range, for example, from 5 to 35% by weight.

The term "flavoured component" as used throughout the specification is meant to include distinctively flavoured products suitable for use in potable beverages and which have characteristic and recognisable flavours. The physical form of the flavour component, or components in the case of a mixture, is not especially important although as will become apparent one preferred form is an oil which has been obtained by alcohol-extraction. Examples of flavour components will also be described generally and specifically.

Known aqueous, including aqueous-alcohol based fruit drinks contain fruit juice concentrates and/or water soluble flavourings for conferring the required flavour. Some of these flavourings can have unpleasant 'cooked' off-tones making them unattractive. Consumers are becoming increasingly aware of synthetic additives in drinks and have created a demand for drinks based on the genuine basic ingredient. Consequently, there is a need to supply potable beverages which are based on naturally occurring products and which do not contain synthetically manufactured flavourings. There is furthermore an extremely limited variety of flavoured drinks available to the consumer. The vast majority of beverages available are fruit drinks based on a single fruit or mixture of fruits. The consumer therefore has less choice available when selecting beverage products. In known beverage making processes there is transfer of flavour from a water-immiscible phase (e.g. oil) to an aqueous flavour vehicle.

Within the present technical field it is known that high energy demanding mechanisms can be used as counter-current extractors in the above transfer operation. They work by physically shearing the 'oil' into small globules. Within any particular extractor a greater physical force will produce a smaller globule.

The desired effect is to optimise the rate of flavour exchange. The emulsion so formed must then be separated into its two original phases. Very often emulsions formed using this extractor technique are stable and present difficulties

-3-

in separation.

A further known method of effecting flavour transfer is by using the technique of tinctures. Basically, this is quite similar to the above mechanical extractor technique but involves tediously shaking and/or stirring, separating the oil and re-extracting to transfer as much flavour as possible. This technique is not only tedious but also inefficient.

It is from a consideration of the shortcomings of known beverages which has led to the development of the present invention which is not limited to the field of fruit based drinks.

According to this invention there is provided a process for making a beverage or an ingredient for a beverage from one or more flavoured components containing an alcohol-soluble oil or consisting of an alcohol-extracted oil wherein an alcoholic solution of the flavoured component(s) is diluted with water or a water/alcohol mixture to form an emulsion which is filtered through a filter system to separate the emulsion, and the filtrate collected as the beverage or as an ingredient for a beverage.

The emulsion is preferably formed whilst mixing at low shear during dilution.

The emulsion formed is preferably pumped through the filter system under pressure.

Further alcohol may be subsequently added to the filtrate

-4-

and/or one or more other flavoured components may be added. A mixture of different flavoured components may be used in the process. Several ingredients, each obtained separately by the process, may be combined to form a beverage with attractive flavour.

It is preferred for convenience to use as flavoured component an alcohol-extracted oil of a characeristically flavoured product. Such oil may be an 'essential oil' in the sense that it consists of an alcohol-soluble essence or extract of the flavoured product from which it has been obtained. If the flavoured product to be employed is a fruit, herb, nut or spice the alcohol-extracted oil may be conveniently prepared by thoroughly mixing and/or crushing the product (or its pulp) in alcohol to form a solution and subsequently evaporating the alcohol to leave a concentrated, highly aromatic, oil. These alcohol-extracted oils have been found to be water-immiscible or at least contain a portion of water-immiscible oil. In embodiments of the invention utilizing one or more alcohol-extracted oils the process still involves transfer of the flavour from a water-immiscible oil to a water-containig flavour vehicle. This technique can provide rapid and efficient transfer of flavour.

The flavoured component may comprise naturally occurring edible products known to confer a distinctive flavour, e.g. fruits whether or not citrus, berries, nuts, herbs, spices, seeds or an extract of one or more of the foregoing. For example, the process may be applied to citrus oils derived from citrus fruit such as lemon, orange or lime oils, berries, such as juniper berries, nuts such as walnut, pistachio, almond or sesame nuts, seeds such as angelica seed or anise seed or essential oils whether or not alcohol-extracted such as angelica seed oil, aniseed oil, caraway oil, cinammon bark oil, coriander oil, fennel oil, juniper berry oil, mandarin oil, aniseed oil, sesame oil, walnut oil, almond oil or orange oil. The combination of two or more of any of the foregoing may be used in a beverage or as an ingredient therefor.

In one example of a beverage composition the flavoured components comprise coriander oil and angelica seed oil together with juniper berry oil. This combination of components may make a gin-flavoured drink without the lengthy operation of distillation normally used to produce the characteristic gin flavour.

In accordance with the invention the flavoured component(s) may contain an alcohol-soluble oil. Here the naturally occurring product itself may be employed, e.g. fruit, nut or berry preferably crushed to a pulp providing it is possible to form an alcoholic solution in which the alcohol-soluble oil is dissolved. The filtration step should remove any suspended solids but the filter may become quickly clogged. Here it is more preferable to use an oil as the basis for forming the alcoholic solution.

The final alcohol concentration may be, for example, 5 to 35%, preferably 10 to 25% by weight.

In the dilution step an emulsion is formed which may be dense and milky-white, consisting of roughly micron sized globules of oil suspended in the aqueous vehicle. This avoids using expensive mechanical extractors and can transfer the true, e.g. fruit falvour(s), from the oil extract with attractive efficiency. If a water/alcohol composition is used in the dilution step then it preferably comprises less than 70% by weight of alcohol. The dilution proportions will depend upon the final alcohol content required, for example a filtrate having an alcohol content of approximately 20% may be required.

Before or after step (b) other components may be added, for example sugar to increase sweetness.

The present invention is applicable to any flavoured product that contains an alcohol-extractable oil whether or not alcohol is subsequently used to extract it. For example, sesame nuts contain an oil component that may be extracted by exerting sufficient pressure. That oil would still be regarded as alcohol-extractable because it could also be obtained by the alcohol-extraction technique. The examples of oils noted above may or may not have been obtained by alcohol-extraction. In this case the oils will nevertheless comprise or consists of an alcohol-soluble oil suitable for undergoing the present process.

One example of a suitable filter system is an in-line membrane filter. Other filter media such as cellulose fibres or silicieous material could be used but they may absorb some flavoured component(s) and are not preferred. A membrane filter of a plastics material such as good grade polyethylene or polypropylene is most preferred.

In a first filtration step a prefilter may be used wherein the pore diameter may be of the order 0.45 micron. This can give a clear filtrate. If a 'sparkling' clear filtrate is required then a guard or polishing filter having a pore size of 0.2 microns may be preferred either instead of the 0.45 micron filter but preferably in addition thereto. It is also preferred for the filtration step to be carried out under pressure, as is required when a direct, in-line membrane filter is used. For example, the emulsion may be pumped through the filter(s). Pressure is necessary to force the liquid through a membrane filter and by monitoring the pressure across the filter system it is possible to determine when filter change or backwashing is necessary. The filter or filters used can be cleaned by backwashing with an alcohol solution.

The filter system removes the oil globules quite unexpectedly since many emulsions would simply pass through and cause turbidity in the filtrate. In embodiments where citrus fruit oil extract is used, the filtrate obtained can have high genuine citrus flavour and aroma levels. We have found that the levels obtained can be higher than if the tedious tincture techniques are used.

Spices provide another useful source of flavoured component where their characteristic flavours can be imparted to relatively low alcohol concentration beverages.

An advantage of the process resides in the ability to produce clear, not turbid, drinks. This inherent advantage flows from using the emulsification flavour transfer technique.

The present process may be operated so as to minimise or overcome the disadvantages of the known flavour transfer techniques whilst simultaneously confering comparatively higher detectable flavour levels.

The particular flavour imparted to the beverage product will be that level of flavour of the component or components which is in solution at the level of alcohol chosen as the final vehicle.

This provides the advantage of flavour selection by alcohol concentration and is considered to differentiate the present method from the use of high shear emulsion breaking techniques.

In order that the invention may be further illustrated and readily carried into effect embodiments thereof will now be presented by way of examples only.

Example 1

To make one litre of aqueous/alcoholic citrus drink:-

-9-

Materials

1. Neutral spirit - 96.3% ethanol, balance water

2. Fruit oil extract - citrus oil

3. Deionized water

4. Sugar syrup at 67° Brix

5. Plastics material membrane filter 0.45 micron pore diameter

Method

1. Sufficient neutral spirit was measured into a container so that the final alcohol concentration would be 20%. In this example 208 ml neutral spirit as above was equivalent to 1 litre at 20% alcohol.

2. 3g of citrus oil extract was added to the high strength alcohol and dissolved therein.

3. 182 ml of deionized water was added to the solution and mixed to allow an emulsion to form.

4. 100 ml of sugar syrup was added to the emulsion whilst stirring.

5. The volume was checked and adjusted to one litre.

6. The oil extract was then separated by passing the emulsion through the in-line membrane filter.

7. The clear filtrate was collected which consisted of the final beverage having desirable levels of real citrus flavour and aroma.

Example 2

Example 1 above was repeated but the quantity of neutral

-10-

spirit was reduced and in step 3 above wine was added, not deionized water.    Similar results were obtained.    This illustrates an embodiment wherein a composition comprising water/alcohol mixture is used in the dilution step of the process.

The steps and materials used in the following examples correspond substantially with those of Example 1 with substitution of flavoured component(s).

Example 3

Nut oil extract - almond oil was dissolved in alcohol 96%. On dilution to 50% alcohol a white emulsion was formed.    The clear filtrate from this contained the typical flavour and aroma of almond.    This example may be repeated with additional flavoured components and the quantities varied as required.

Example 4

Seed oil extract - aniseed oil was dissolved in 96% alcohol. On dilution to 50% alcohol a yellow emulsion was formed and the filtrate containing the characteristic flavour and aroma of aniseed.    This example may be repeated with additional flavoured components and the quantities varied as required.

Example 5

Fruit oil extract - lime oil was dissolved in 96% alcohol. When diluted into an alcoholic liquor at 20% alcohol concentration an emulsion was formed which on filtration gave a clear liquor with the characteristic aroma and flavour of limes.

Example 6

Berry extract - juniper berry extract was dissolved in 96% alcohol. On dilution an emulsion formed and the filtrate contained the characteristic flavour of juniper berry.

This filtrate and starting material exemplifies an ingredient for a beverage. The starting material may be admixed with other 'gin botanical' extracts whether or not the other extracts are capable of forming an emulsion on dilution.

-1-

## CLAIMS

1. A process for making a beverage or an ingredient for a beverage from one or more flavoured components comprising an alcohol-soluble oil wherein an alcoholic solution of the flavoured component(s) is diluted with water or a water/ alcohol mixture to form an emulsion which is filtered through a filter system to separate the emulsion, and the filtrate collected as the beverage or as an ingredient for a beverage.

2. A process as claimed in Claim 1, wherein the emulsion is formed whilst mixing at low shear during dilution.

3. A process as claimed in Claim 1 or 2, wherein the emulsion formed is pumped through the filter system under pressure.

4. A process as claimed in any preceding claim, wherein further alcohol is subsequently added to the filtrate.

5. A process as claimed in any preceding claim, wherein the flavoured component(s) is (are) derived from one or more of the following: fruit, herb, nut, spice, seed or berry.

6. A process as claimed in any preceding claim, wherein the flavoured component(s) comprise(s) essential or alcohol-extracted oil(s).

7. A process as claimed in any preceding claim, wherein the flavoured component comprises or is derived from one or more of the following: citrus oil, juniper berries, walnut, pistachio, almond or sesame nuts, angelica or anise seeds, angelica seed oil,

-2-

aniseed oil, caraway oil, cinammon bark oil, coriander oil, fennel oil, juniper berry oil, mandarin oil, anise seed oil, sesame oil, walnut oil, almond oil, lemon oil, orange oil, or lime oil.

8. A process as claimed in Claim 9, wherein the flavoured components comprise coriander oil, angelica seed oil and juniper berry oil either as a mixture of flavoured components for forming an alcoholic solution or when the process is applied sequentially to these individual components and the filtrates subsequently combined.

9. A process as claimed in any preceding claim, wherein the final alcohol concentration is 5-35%, preferably 10-25% by weight.

10. A process as claimed in any preceding claim, wherein the filter system comprises an in-line membrane filter constructed of plastics material such as polyethylene or polypropylene.

11. A beverage product comprising at least one ingredient which has undergone a process as claimed in any preceding claim.